# EUROPEAN PATENT APPLICATION

(11) **EP 4 525 263 A2**
(43) Date of publication of application: **19.03.2025**
(21) Application number: 24200032.1
(22) Date of filing: 12.09.2024
(51) Int. Cl.: H02J 7/00

(54) **MOBILE POWER SYSTEM**

(30) Priority: 15.09.2023 US 202318468487
(71) Applicant: MillerKnoll, Inc., Zeeland, MI 49464 (US)
(72) Inventor: HECHT, Samuel, London, EC1M 5UA (GB); COLIN, Kimberlee, London, EC1M 5UA (GB); LEITNER, Leo, London, E9 7TA (GB); KATJE, Michael, Grand Haven, 49417 (US); LILLEY, Matthew, Grand Rapids, 49534 (US)
(74) Representative: Boult Wade Tennant LLP

(57) **Abstract**

A mobile power system includes a power tray including a housing, a power inverter, a plurality of first electrical interfaces supported by the housing and electrically connected to the power inverter, and a power outlet configured to supply AC power to a first external device. The mobile power system further includes a plurality of power supplies removably coupled to the power tray for alternately supplying DC power to the power inverter of the power tray and receiving charging power from the power tray. Each power supply includes a second electrical interface that selectively engages one of the plurality of first electrical interfaces to electrically connect each power supply to the power tray and a power output port configured to connect to a second external device to provide DC power to the second external device.

## Description

### FIELD OF THE INVENTION

The present invention relates to a power system, and more particularly a mobile power system.

### BACKGROUND OF THE INVENTION

A mobile power system may be transported around professional and educational environments to provide electrical power to various devices in environments without a conventional power system.

### SUMMARY OF THE INVENTION

The present invention provides, in one aspect, a mobile power system including a power tray including a housing, a power inverter supported within the housing, a plurality of first electrical interfaces supported by the housing and electrically connected to the power inverter, and a power outlet disposed on the housing and electrically connected to the power inverter. The power outlet is configured to supply AC power to a first external device. The mobile power system further includes a plurality of power supplies removably coupled to the power tray for alternately supplying DC power to the power inverter of the power tray and receiving charging power from the power tray. Each power supply includes a housing, a plurality of battery cells supported within the housing, and a second electrical interface disposed on the housing and electrically connected to the plurality of battery cells. The second electrical interface of each power supply selectively engages one of the plurality of first electrical interfaces to electrically connect each power supply to the power tray. Each power supply also includes a power output port disposed on the housing and electrically connected to the plurality of battery cells. The power output port connects to a second external device to provide DC power to the second external device.

The present invention provides, in another aspect, a power supply including a housing defining a compartment, a plurality of battery cells supported within the housing, and a power output port supported by the housing and electrically connected to the plurality of battery cells. The power output port is configured to provide DC power to an external device. The power supply further includes a drawer movably coupled to the housing and received within the compartment, and a locator tag disposed within the drawer.

The present invention provides, in another aspect, a power supply including a housing including an upper portion defining a top surface and a bottom portion defining a bottom surface, a plurality of battery cells supported within the housing, and an aperture extending through the upper portion of the housing to form a handle with the top surface of the housing. The aperture is defined between the top surface of the housing and the bottom portion of the housing. The power supply further includes a plurality of battery cells supported within the housing and an electrical interface disposed within the bottom portion of the housing to extend through the bottom surface. The electrical interface is electrically connected to the plurality of battery cells and configured to receive charging power from an external power source. Moreover, the power supply includes a power output port disposed within the upper portion of the housing to extend through the top surface of the housing. The power output port is electrically connected to the plurality of battery cells and configured to provide DC power to an external device.

### BRIEF DESCRIPTION OF DRAWINGS

FIG. 1 is a perspective view of a mobile power system according to an embodiment of the present invention.
FIG. 2 is a perspective view of a power tray of the mobile power system of FIG. 1.
FIG. 3 is another perspective view of the power tray of FIG. 2.
FIG. 4 is an exploded view of the power tray of FIG. 2.
FIG. 5 is a perspective view of a power supply of the mobile power system of FIG. 1.
FIG. 6 is another perspective view of the power supply of FIG. 5.
FIG. 7 is an exploded view of the power supply of FIG. 5.
FIG. 8 is another exploded view of the power supply of FIG. 5.
FIG. 9 is a bottom view of the power supply of FIG. 5.
FIG. 10 is a bottom perspective view of the power supply of FIG. 5, with a locator tag drawer removed from the power supply.
FIG. 11 is a schematic diagram of the mobile power system of FIG. 1.
FIG. 12 is a perspective view of the mobile power system of FIG. 1 being used in a work environment.

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting.

### DETAILED DESCRIPTION

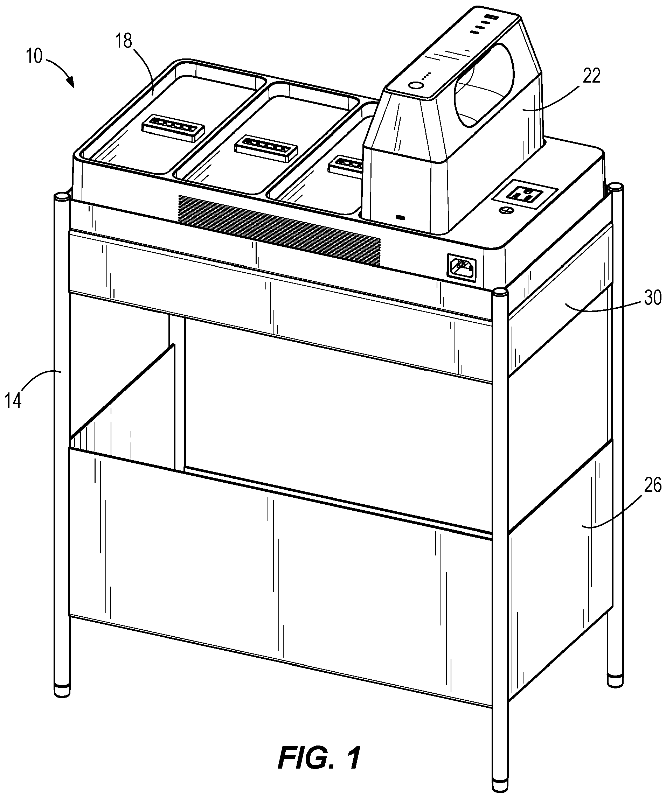

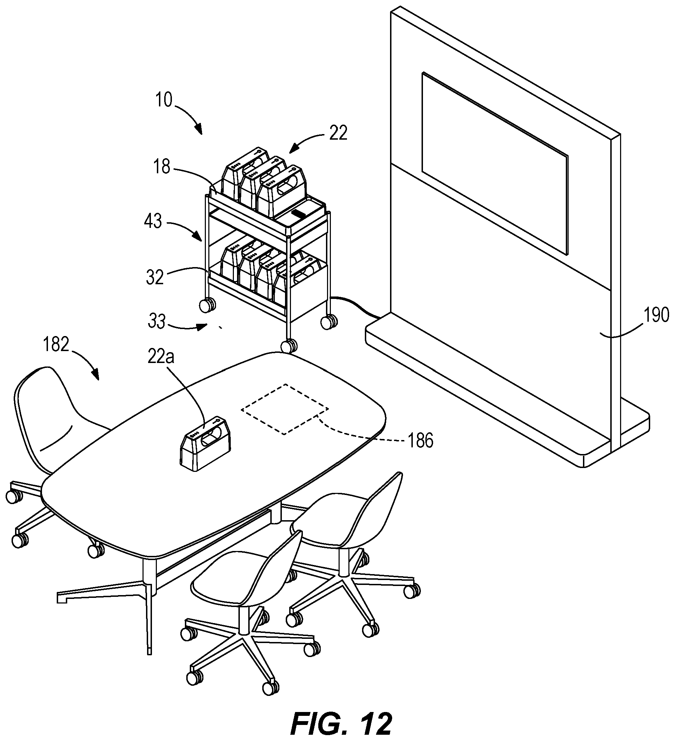

FIG. 1 illustrates a mobile power system 10. The mobile power system 10 may be supported on a furniture stand 14 and includes a power tray 18 and a plurality of power supplies 22 (FIG. 12) removably coupled to the power tray 18. In FIG. 1, the plurality of power supplies 22 is represented by one power supply 22. The illustrated furniture stand 14 includes a bottom compartment 26 and a top compartment 30 that are configured to hold various objects. The furniture stand 14 is transportable within a professional setting or an educational setting to provide the mobile power system 10 at different working spaces. In other embodiments, the furniture stand 14 may be a cart 32 (FIG. 12) provided with rollers 33 to easily transport the mobile power system 10 across a surface (e.g., a floor). In still other embodiments, the furniture stand 14 may have other configurations. In some embodiments, the mobile power system 10 may be positioned or supported on other objects, such as tables, shelves, cabinets, the floor, and the like.

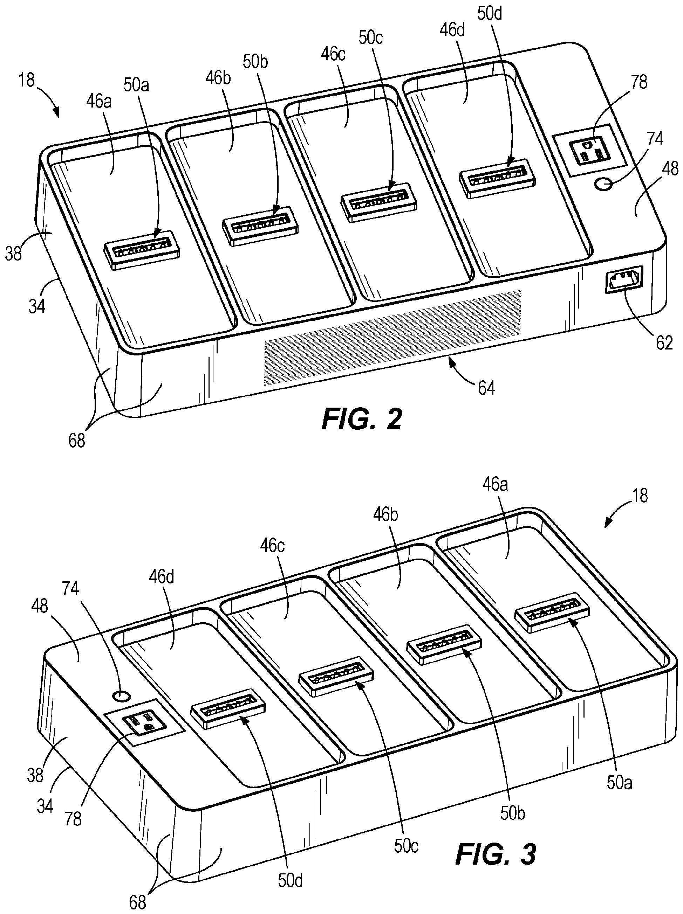

With reference to FIGS. 1-4, the power tray 18 is illustrated. In the illustrated embodiment, the power tray 18 is disposed on the top compartment 30 of the furniture stand 14 while other objects may be placed on the bottom compartment 26 of the furniture stand 14. For example, the bottom compartment 26 may hold another plurality of power supplies 43 (FIG. 12). In other embodiments, the power tray 18 may be disposed on the bottom compartment 26 of the furniture stand 14. The illustrated power tray 18 includes a housing 34 having a top cover 38 and a bottom cover 42 coupled to the top cover 38. The bottom cover 42 includes a plurality of bosses 44 that interface with the top cover 38. The bosses 44 may receive fasteners (e.g., screws, rivets, etc.) to couple the top cover 38 to the bottom cover 42.

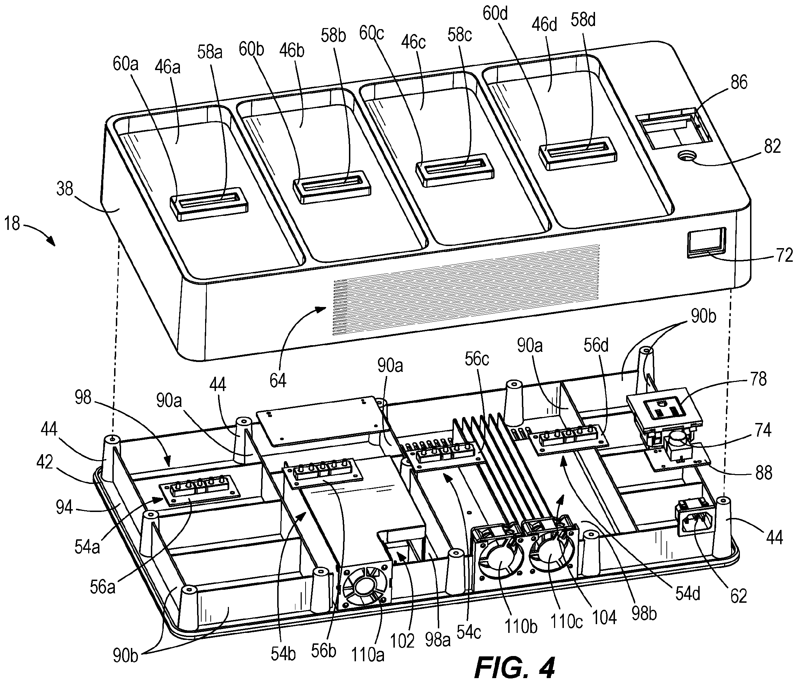

With continued reference to FIGS. 1-4, the power tray 18 further includes a plurality of receptacles 46a-46d defined within a top surface 48 of the top cover 38. In the illustrated embodiment, the power tray 18 includes four receptacles 46a-46d. In other embodiments, the power tray 18 may include more or less than four receptacles 46a-46d. Each receptacle 46a-46d includes an electrical interface 50a-50d configured to engage a respective power supply 22, thereby electrically connecting the respective power supply 22 to the power tray 18. The plurality of receptacles 46a-46d conform to the shape of the plurality of power supplies 22 so that the plurality of power supplies 22 may be easily received by the receptacles 46a-46d. In the illustrated embodiment, the receptacles 46a-46d are rectangular recesses that receive bottoms of the power supplies 22. In other embodiments, the receptacles 46a-46d may have other configurations. For example, the receptacles 46a-46d may be other shapes (e.g., square, rounded, oblong, etc.) and/or may be projections that extend into the bottoms of the power supplies 22. The electrical interface 50a-50d of each receptacle 46a-46d includes a set of electrical connectors 54a-54d (FIG. 4) respectively coupled to a plurality of first printed circuit boards (PCB) 56a-56d. The set of electrical connectors 54a-54d of each electrical interface 50a-50d extends into a slot 58a-58d defined in each receptacle 46a-46d. In the illustrated embodiment, each slot 58a-58d is defined by a raised rim 60a-60d within the corresponding receptacle 46a-46d. The raised rims 60a-60d help locate and properly position the power supplies 22 in the receptacles 46a-46d. For example, the raised rims 60a-60d and the slots 58a-58d may be offset from centers of the receptacles 46a-46d such that the power supplies 22 can only be inserted into the receptacles 46a-46d in one orientation. In some embodiments, the raised rims 60a-60d may be irregularly shaped to only allow the power supplies 22 to be inserted into the receptacles 46-46d in one orientation. Alternatively, the raised rims 60a-60d and the slots 58a-58d may be universal to allow the power supplies 22 to be inserted into the receptacles 46a-46d in multiple orientations.

The illustrated power tray 18 further includes an AC input port 62 and vents 64 disposed along one of the sidewalls 68 of the top cover 38. Specifically, the AC input port 62 is disposed within a first opening 72 defined in a respective sidewall 68 of the top cover 38. In other embodiments, the AC input port 62 may be located elsewhere on the power tray 18. The AC input port 62 is configured to connect to one end of an AC cord while another end of the AC cord is plugged into a conventional AC wall outlet, thereby supplying AC power to the power tray 18. The vents 64 are proximate the AC input port 62 and configured as slotted openings to allow air to flow in and out of the power tray 18.

Moreover, the power tray 18 includes a power button 74 and an AC power outlet 78 disposed on the top surface 48 of the top cover 38. Specifically, the power button 74 is disposed within a second opening 82 defined in the top surface 48, and the AC power outlet 78 is disposed within a third opening 86 defined in the top surface 48. In other embodiments, the power button 74 and/or the AC power outlet 78 may be located elsewhere on the power tray 18. The power button 74 is electrically connected to a second PCB 88 and configured to be depressed by a user to operate the power tray 18. Although the illustrated power button 74 is a depressible button, in other embodiments, the power button 74 may be a different type of actuator, such as a slidable switch, a rotatable dial, and the like. The AC power outlet 78 is configured to supply AC power from the power tray 18 to various external devices (e.g., TVs, workstations, agile wall monitors, etc.). In the illustrated embodiment, the AC power outlet 78 is a North American power outlet. In some embodiments, the AC power outlet 78 may be a European power outlet. In other embodiments, the AC power outlet 78 may be a United Kingdom power outlet. In further embodiments, the power tray 18 may be provided with an outlet plug cover for protecting the AC power outlet 78 from fluid and debris.

The bottom cover 42 of the power tray 18 includes a plurality of walls 90a, 90b extending from a bottom surface 94 of the bottom cover 42. The plurality of walls 90 includes inner walls 90a and outer walls 90b. The outer walls 90b form an outer boundary of the bottom cover 42. The inner and outer walls 90a, 90b are connected to each other to form multiple electronic compartments 98. Each electronic compartment is configured to support and accommodate various electrical components disposed within the power tray 18. A first electronic compartment 98a is configured to support and accommodate an AC-DC power converter 102. A second electronic compartment 98b is configured to support and accommodate a power inverter 104. The outer walls 90b also accommodate three fans 110a-110c and position the fans 1 10a-1 10c adjacent the vents 64 when the top cover 38 is coupled to the bottom cover 42. As such, the fans 110a-110c are configured to draw air through the vents 64 and into an interior volume of the power tray 18 to cool the electrical components of the power tray 18. Specifically, a first fan 110a is disposed in front of the power converter 102, while a second fan 110b and a third fan 110c are disposed in front of the power inverter 104.

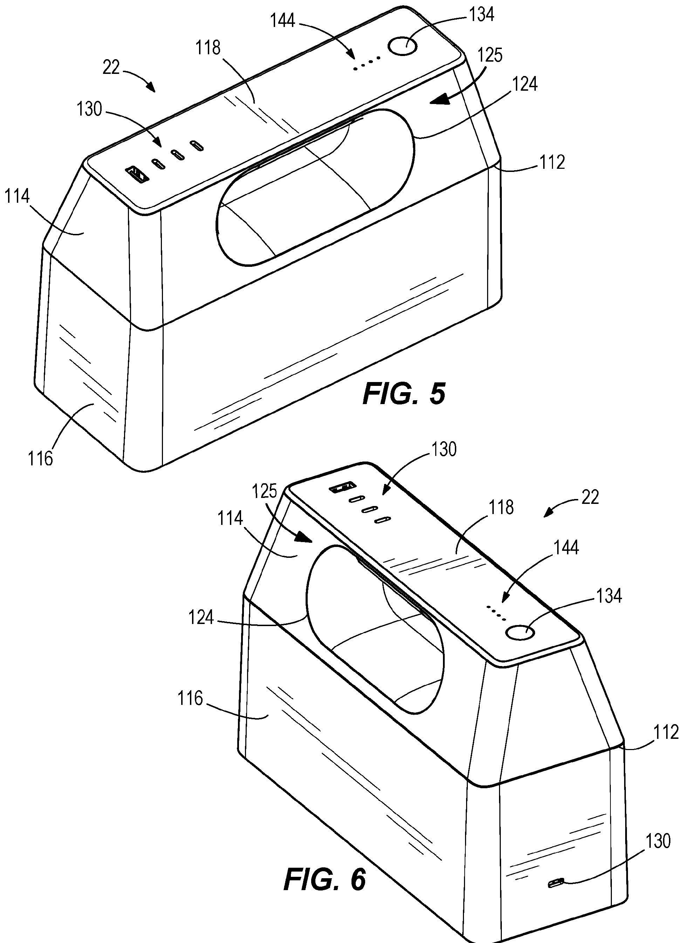

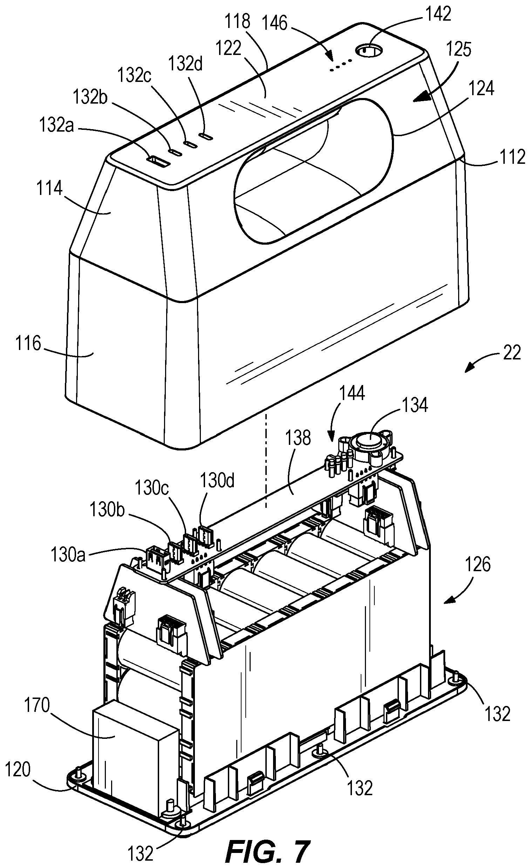

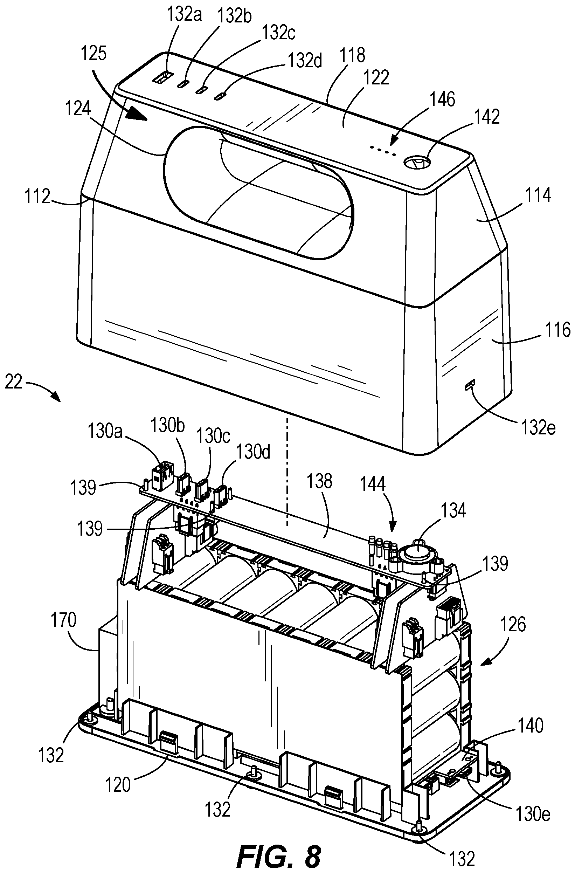

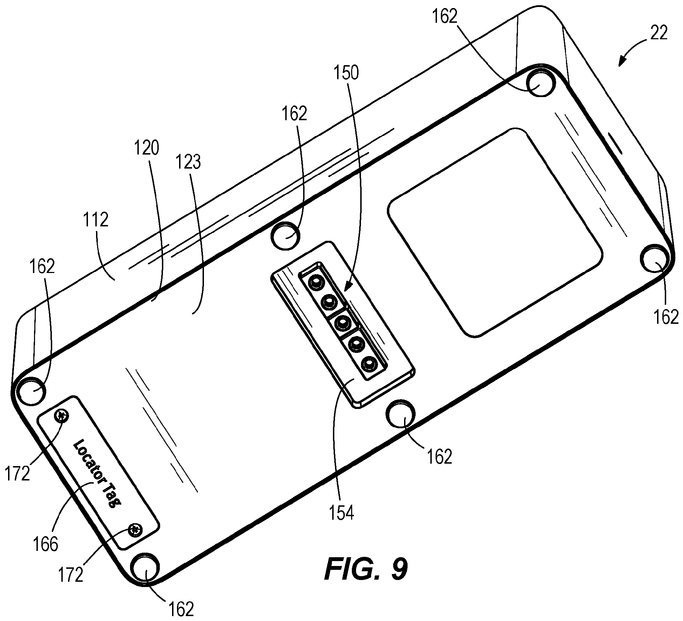

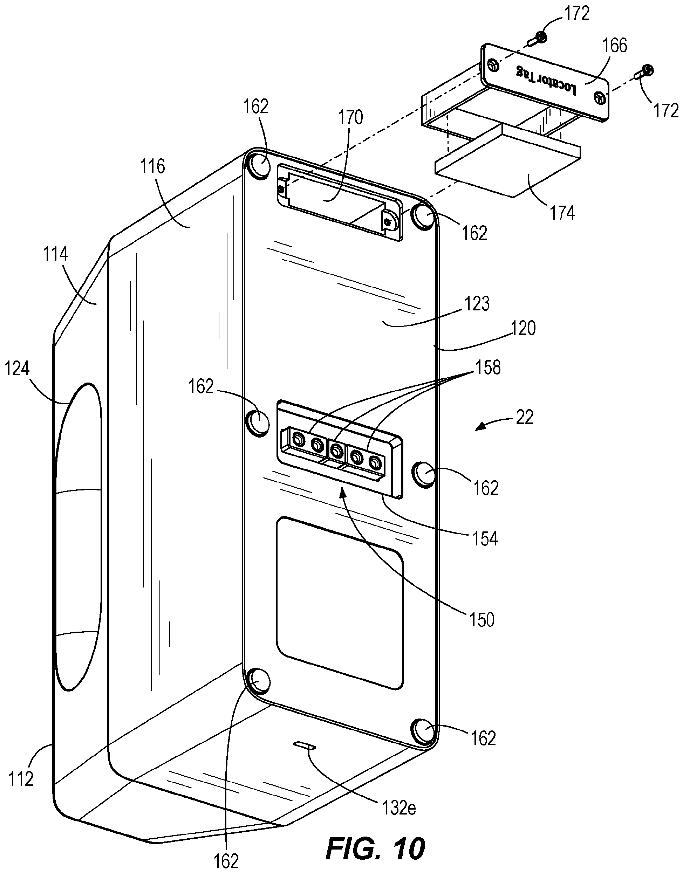

With reference to FIGS. 5-8, the power supply 22 is illustrated. The illustrated power supply 22 includes a housing 112 having an upper portion 114 and a bottom portion 116, a top plate 118 coupled to the upper portion 114, and a bottom plate 120 coupled to the bottom portion 116. The top plate 118 defines a top surface 122 of the housing 112 and the bottom plate 120 defines a bottom surface 123 (FIGS. 9 and 10) of the housing 112. In the illustrated embodiment, the housing 110 of the power supply 22 tapers inwardly from the bottom portion 116 to the upper portion 114. The top plate 118 has multiple tubular projections configured to be respectively received within a plurality of apertures defined in tabs extending from the upper portion 114 of the housing 112 to couple the top plate 118 to the housing 112. The bottom plate 120 is coupled to the bottom portion 116 of the housing 110 by a plurality of fasteners 132 (e.g., screws). An aperture 124 extends through the upper portion 114 of the housing 110 of the power supply 22 to form a handle 125 of the power supply 22 with the top surface 122 of the housing 112. A user may insert their hand through the aperture 124 to grasp the top plate 118 and the housing 112 to carry the power supply 22.

The power supply 22 further includes a plurality of battery cells 126, a plurality of power output ports 130, and a power button 134. The plurality of battery cells 126 is housed within the bottom portion 116 of the housing 112 and supported by the bottom plate 120. Multiple output ports 130a-130d of the plurality of power output ports 130 are disposed within the upper portion 114 of the housing 112 and extend through output port openings 132a-132d defined in the top plate 118. A single output port 130e of the plurality of power output ports 130 is disposed within the bottom portion 116 of the housing 112 and extends through another output port opening 132e defined within the bottom portion 116. The output ports 130a-130d are electrically connected to a third PCB 138 that is coupled to the top plate 118 by fasteners 139 (e.g., screws). The single output port 130e is electrically connected to a fourth PCB 140.

In the illustrated embodiment, the plurality of power output ports 130 include a USB-A connector 130a and four USB-C connectors 130b-130e. As such, the illustrated embodiment of the power supply 22 has five power output ports 130. In other embodiments, the power supply 22 may have more or less than five power output ports 130. In further embodiments, the plurality of power output ports 130 may have other types of electrical connectors. The plurality of power output ports 130 is electrically connected to the plurality of battery cells 126 via the third and fourth PCBs 138, 140 to supply DC power from the battery cells 126 to various external devices (e.g., cell phone, laptop, etc.) that are connected to the power output ports 130. In other embodiments, the single output port 130e may be configured to receive power from an external power source (e.g., conventional wall outlet) to recharge a respective power supply 22.

The power button 134 is also disposed in the upper portion 114 of the housing 112 and extends through a button opening 142 defined within the top plate 118. In other embodiments, the power button 134 may be located elsewhere on the housing 112. The power button 134 is also electrically coupled to the third PCB 138, and thereby electrically coupled to the plurality of battery cells 126. In operation, a user may depress the power button 134 to activate the power supply 22 to supply DC power to one or more external devices connected to the power output ports 130. Although the illustrated power button 134 is a depressible button, in other embodiments, the power button 134 may be a different type of actuator, such as a slidable switch, a rotatable dial, and the like.

With continued reference to FIGS. 5-8, the power supply 22 also includes a plurality of indicators 144. The illustrated indicators 144 include multiple LEDs electrically coupled to the third PCB 138 to be electrically coupled to the battery cells 126. The indicators 144 respectively extend into LED openings 146 defined within the top plate 118 of the power supply 22 to display a battery life level of the power supply 22. Also, the indicators 144 may indicate that the power supply 22 has undergone an issue. For example, the indicators 144 may flash in set patterns or colors to indicate a fault with the power supply 22. Different flashing patters or colors may represent codes associated with different faults. In the illustrated embodiment, the plurality of indicators 144 includes four LEDs. In other embodiments, the plurality of indicators 144 may include more or less than four LEDs.

With reference to FIGS. 9 and 10, the power supply 22 includes an electrical interface 150 disposed on the bottom plate 120 of the power supply 22. Specifically, the electrical interface 150 is disposed in a recess 154 defined in the bottom plate 120. The electrical interface 150 includes a set of electrical connectors 158 electrically coupled to a fifth PCB to be electrically connected to the plurality of battery cells 126. As such, the electrical interface 150 is configured to engage a respective electrical interface 50a-50d of the power tray 18, thereby electrically connecting the power supply 22 to the power tray 18. When the power supply 22 is electrically connected to the power tray 18, the power supply 22 may receive DC power from the power tray 18 to be recharged. Alternatively, the power supply 22 may supply DC power to the power tray 18 to supply power to an external device connected to the AC power outlet 78, as discussed below.

In addition, the power supply 22 includes a plurality of cushions 162 or pads. The plurality of cushions 162 is disposed at various locations on the bottom plate 120 to support the power supply 22 when placed on a surface (e.g., a tabletop surface). The cushions 162 may be made of a relatively soft material (e.g., rubber, felt, etc.) to reduce the possibility of marring the surface when the power supply is placed on the surface.

The illustrated power supply 22 also includes a locator tag drawer 166. The locator tag drawer 166 is removably coupled to the bottom plate 120 by a pair of fasteners 172 (e.g., screws). A locator tag compartment 170 is defined within the bottom plate 120 and configured to slidably receive and retain the locator tag drawer 166 within the bottom plate 120. The locator tag compartment 170 extends upwardly from the bottom plate 120 and into the housing 112 of the power supply 22. In the illustrated embodiment, the locator tag compartment 170 is located on an opposite side of the housing 112 from the single output port 132. In other embodiments, the locator tag compartment 170 may be positioned elsewhere on the power supply 22. The locator tag drawer 166 is configured to hold a locator tag device (e.g., an Apple^{®} AirTag, a Tile tracker tag, etc.) while the locator tag drawer 166 is securely retained within the locator tag compartment 170 of the bottom plate 120. Placing a locator tag device within each power supply 22 helps a user to easily locate a respective power supply 22 that is misplaced. When the locator tag device needs to be recharged or otherwise replaced, a user can release the fasteners 172 to open the locator tag drawer 166. The fasteners 172 may be released with, for example, a screwdriver or Allen wrench. In some embodiments, the fasteners 172 may be proprietary fasteners that can only be released with a special tool. In the illustrated embodiment, the locator tag drawer 166 may be completely removed from the housing 112 when the fasteners 172 are released. In other embodiments, the locator tag drawer 166 may remain attached to the housing 112 when the fasteners 172 are released. The locator tag compartment 170 of the bottom plate 120 may also be provided with a foam component 174 to ensure that the locator tag device is not damaged or does not rattle when retained within the locator tag drawer 166 and the locator tag compartment 170.

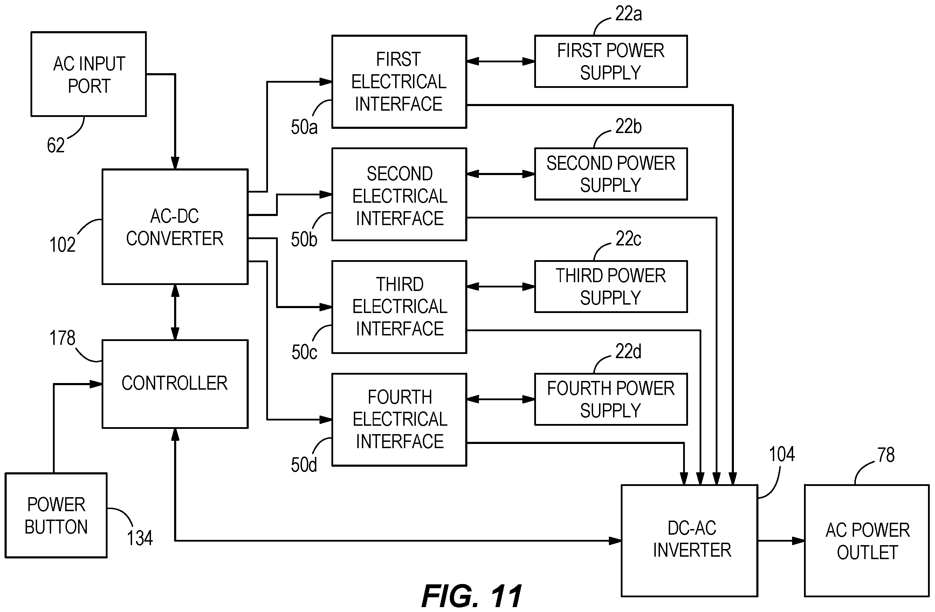

FIG. 11 illustrates the mobile power system 10 including the AC input port 62, the power converter 102, a controller 178, the power button 134, the power inverter 104, the AC power outlet 78, the electrical interfaces 50a-50d, and the plurality of power supplies 22a-22d. Every electrical component, except for the plurality of power supplies 22a-22d, may be disposed within the power tray 18. The AC input port 62 is electrically connected to the power converter 102 and supplies AC power from an external power source to the power converter 102. After receiving the AC power, the power converter 102 converts the AC power to DC power. The power converter 102 is also electrically connected to the controller 178 so that the controller 178 senses when AC power is being provided to the AC input port 62 and supplied to the power converter 102. Moreover, the power converter 102 is electrically connected to the electrical interfaces 50a-50d and configured to provide the DC power to the electrical interfaces 50a-50d to charge the plurality of power supplies 22a-22d electrically coupled to the electrical interfaces 50a-50d.

The power button 134 is electrically connected to the controller 178 to control the operation of the power inverter 104. The power inverter 104 is electrically connected to the electrical interfaces 50a-50d, the controller 178, and the AC power outlet 78. As such, the power inverter 104 is permitted to provide AC power to the AC power outlet 78 when the power supplies 22a-22d are respectively coupled to each electrical interface 50a-50d of the power tray 18, the AC input port 62 is not receiving AC power, and an external device is plugged into the AC power outlet 78. When a user depresses the power button 134, the controller 178 provides instructions to the power inverter 104 to either turn on or turn off. When the power inverter 104 is turned on, the power supplies 22a-22d are simultaneously discharged to supply DC power to the power inverter 104. After receiving the DC power, the power inverter 104 converts the DC power into AC power. The power inverter 104 then supplies the AC power to the AC power outlet 78 to power the external device.

FIG. 12 illustrates various ways in which the mobile power system 10 can be operated to supply power at locations without a conventional power system (e.g., wall outlets). For example, one of the power supplies 22a may be placed at a collaborative workstation 182 to provide power to an external device 186 that is a low-powered device, such as a laptop, a cellphone, etc. In some situations, the power supply 22a may supply power to multiple external devices 186 simultaneously. When the power supply 22a is depleted, or at the end of a working session, the power supply 22a may be returned to the power tray 18 for charging.

In another example, when the power tray 18 is not electrically connected to a wall outlet, the power tray 18 and the power supplies 22 electrically connected to the power tray 18 may be moved throughout a professional setting or an educational setting to provide power to an external device plugged into the AC power outlet 78 of the power tray 18. Typically, the external device that is plugged into the AC power outlet 78 is a high-powered device, such as a TV, a workstation, an agile wall monitor 190, etc. In this situation, the power supplies 22 may provide power to the external device through the power tray 18.

In still another example, the power tray 18 may be electrically connected to a wall outlet and the external device may be plugged into the AC power outlet 78. In this situation, the power tray 18 may act as an extension cord to provide AC power from the wall outlet to the external device. The power tray 18, however, may at the same time also charge any power supplies 22 electrically connected to the power tray 18. In other embodiments, AC power may bypass the power supplies 22 when the power tray 18 is electrically connected to the wall outlet and the external device. When the power tray 18 is no longer electrically connected to the wall outlet, the power supplies 22 are automatically discharged to ensure that power supplied to the external device is not interrupted.

Although the invention has been described in detail with reference to certain preferred embodiments, variations and modifications exist within the scope and spirit of one or more independent aspects of the invention as described.

The application also includes the following numbered clauses:
Clause 1. A mobile power system comprising:
   a power tray including a housing, a power inverter supported within the housing, a plurality of first electrical interfaces supported by the housing and electrically connected to the power inverter, and a power outlet disposed on the housing and electrically connected to the power inverter, the power outlet configured to supply AC power to a first external device; and
   a plurality of power supplies removably coupled to the power tray for alternately supplying DC power to the power inverter of the power tray and receiving charging power from the power tray, each power supply including
      a housing,
      a plurality of battery cells supported within the housing,
   a second electrical interface disposed on the housing and electrically connected to the plurality of battery cells, the second electrical interface of each power supply selectively engaging one of the plurality of first electrical interfaces to electrically connect each power supply to the power tray, and
   a power output port disposed on the housing and electrically connected to the plurality of battery cells, the power output port configured to connect to a second external device to provide DC power to the second external device.
Clause 2. The mobile power system of clause 1, wherein the plurality of power supplies is simultaneously discharged when supplying the DC power to the power inverter of the power tray.
Clause 3. The mobile power system of clause 1, wherein the power tray further includes a power input port configured to receive the AC power from an external power source to supply the AC power to the power tray.
Clause 4. The mobile power system of clause 3, wherein the power tray further includes a AC-DC converter electrically connected to the power input port and the plurality of first electrical interfaces, wherein the AC-DC converter is configured to convert the AC power from the external power source to DC power, and wherein the AC-DC converter supplies the DC power to the plurality of first electrical interfaces of the power tray to provide the charging power.
Clause 5. The mobile power system of clause 1, wherein the housing of the power tray includes a plurality of receptacles, and wherein each first electrical interface is disposed within a respective receptacle of the plurality of receptacles.
Clause 6. The mobile power system of clause 1, wherein the second electrical interface of each power supply selectively engages one of the plurality of first electrical interfaces such that each power supply is positioned at a discrete position on the power tray defined by each first electrical interface.
Clause 7. The mobile power system of clause 1, wherein the power output port of each power supply is a USB port.
Clause 8. The mobile power system of clause 1, wherein each power supply further includes a plurality of indicators configured to display a battery life level of the power supply.
Clause 9. The mobile power system of clause 1, wherein the housing of each power supply has an aperture defined therethrough to form a handle of each power supply.
Clause 10. The mobile power system of clause 1, further comprising a cart configured to support and transport the power tray and the plurality of power supplies.
Clause 11. A power supply comprising:
   a housing defining a compartment;
   a plurality of battery cells supported within the housing;
   a power output port supported by the housing and electrically connected to the plurality of battery cells, the power output port configured to provide DC power to an external device;
   a drawer movably coupled to the housing and received within the compartment; and a locator tag disposed within the drawer.
Clause 12. The power supply of clause 11, further comprising a foam component disposed within the drawer.
13. The power supply of clause 11, wherein the drawer is removably secured to the housing by a fastener.
Clause 14. The power supply of clause 11, wherein the housing includes an upper portion and a bottom portion opposite the upper portion, wherein the power output port is disposed on the upper portion of the housing, and wherein the drawer is coupled to the bottom portion of the housing.
Clause 15. The power supply of clause 14, further comprising an electrical interface supported on the bottom portion of the housing, wherein the electrical interface is electrically connected to the plurality of battery cells and configured to receive charging power from an external power source.
Clause 16. A power supply comprising:
   a housing including an upper portion defining a top surface, and a bottom portion defining a bottom surface;
   a plurality of battery cells supported within the housing;
   an aperture extending through the upper portion of the housing to form a handle with the top surface of the housing, the aperture defined between the top surface of the housing and the bottom portion of the housing;
   a plurality of battery cells supported within the housing;
   an electrical interface disposed within the bottom portion of the housing to extend through the bottom surface, the electrical interface electrically connected to the plurality of battery cells and configured to receive charging power from an external power source; and
   a power output port disposed within the upper portion of the housing to extend through the top surface of the housing, the power output port electrically connected to the plurality of battery cells and configured to provide DC power to an external device.
Clause 17. The power supply of clause 16, wherein the upper portion of the housing tapers inwardly from the bottom portion of the housing to the top surface.
Clause 18. The power supply of clause 16, further comprising a charging port disposed within the bottom portion of the housing, the charging port electrically connected to the plurality of battery cells and configured to receive charging power from a secondary external power source.
Clause 19. The power supply of clause 16, further comprising a power button supported on the top surface of the housing, wherein the power button is operable to actuate the power supply such that the power output port provides DC power to the external device.
Clause 20. The power supply of clause 16, wherein the power output port is a USB port.
Clause 21. The power supply of clause 16, wherein the power output port is one of a plurality of power output ports disposed within the upper portion of the housing to extend through the top surface of the housing.
Clause 22. The power supply of clause 16, further comprising a plurality of indicators supported on the top surface of the housing and configured to display a battery life level of the plurality of battery cells.

## Claims

1. A mobile power system comprising:
a power tray including a housing, a power inverter supported within the housing, a plurality of first electrical interfaces supported by the housing and electrically connected to the power inverter, and a power outlet disposed on the housing and electrically connected to the power inverter, the power outlet configured to supply AC power to a first external device; and
a plurality of power supplies removably coupled to the power tray for alternately supplying DC power to the power inverter of the power tray and receiving charging power from the power tray, each power supply including
a housing,
a plurality of battery cells supported within the housing,
a second electrical interface disposed on the housing and electrically connected to the plurality of battery cells, the second electrical interface of each power supply selectively engaging one of the plurality of first electrical interfaces to electrically connect each power supply to the power tray, and
a power output port disposed on the housing and electrically connected to the plurality of battery cells, the power output port configured to connect to a second external device to provide DC power to the second external device.

2. The mobile power system of claim 1, wherein the plurality of power supplies is simultaneously discharged when supplying the DC power to the power inverter of the power tray.

3. The mobile power system of claim 1 or 2, wherein the power tray further includes a power input port configured to receive the AC power from an external power source to supply the AC power to the power tray, preferably
wherein the power tray further includes a AC-DC converter electrically connected to the power input port and the plurality of first electrical interfaces, wherein the AC-DC converter is configured to convert the AC power from the external power source to DC power, and wherein the AC-DC converter supplies the DC power to the plurality of first electrical interfaces of the power tray to provide the charging power.

4. The mobile power system of any preceding claim, wherein the housing of the power tray includes a plurality of receptacles, and wherein each first electrical interface is disposed within a respective receptacle of the plurality of receptacles.

5. The mobile power system of any preceding claim, wherein the second electrical interface of each power supply selectively engages one of the plurality of first electrical interfaces such that each power supply is positioned at a discrete position on the power tray defined by each first electrical interface.

6. The mobile power system of any preceding claim, wherein:
the power output port of each power supply is a USB port;
each power supply further includes a plurality of indicators configured to display a battery life level of the power supply; and/or
the housing of each power supply has an aperture defined therethrough to form a handle of each power supply.

7. The mobile power system of any preceding claim, further comprising a cart configured to support and transport the power tray and the plurality of power supplies.

8. A power supply comprising:
a housing defining a compartment;
a plurality of battery cells supported within the housing;
a power output port supported by the housing and electrically connected to the plurality of battery cells, the power output port configured to provide DC power to an external device;
a drawer movably coupled to the housing and received within the compartment; and
a locator tag disposed within the drawer.

9. The power supply of claim 8, further comprising a foam component disposed within the drawer.

10. The power supply of claim 8 or 9, wherein:
the drawer is removably secured to the housing by a fastener; and/or
the housing includes an upper portion and a bottom portion opposite the upper portion, wherein the power output port is disposed on the upper portion of the housing, and wherein the drawer is coupled to the bottom portion of the housing, preferably
wherein the power supply further comprises an electrical interface supported on the bottom portion of the housing, wherein the electrical interface is electrically connected to the plurality of battery cells and configured to receive charging power from an external power source.

11. A power supply comprising:
a housing including an upper portion defining a top surface, and a bottom portion defining a bottom surface;
a plurality of battery cells supported within the housing;
an aperture extending through the upper portion of the housing to form a handle with the top surface of the housing, the aperture defined between the top surface of the housing and the bottom portion of the housing;
a plurality of battery cells supported within the housing;
an electrical interface disposed within the bottom portion of the housing to extend through the bottom surface, the electrical interface electrically connected to the plurality of battery cells and configured to receive charging power from an external power source; and
a power output port disposed within the upper portion of the housing to extend through the top surface of the housing, the power output port electrically connected to the plurality of battery cells and configured to provide DC power to an external device.

12. The power supply of claim 11, wherein the upper portion of the housing tapers inwardly from the bottom portion of the housing to the top surface.

13. The power supply of claim 11 or 12, further comprising:
a charging port disposed within the bottom portion of the housing, the charging port electrically connected to the plurality of battery cells and configured to receive charging power from a secondary external power source; and/or
a power button supported on the top surface of the housing, wherein the power button is operable to actuate the power supply such that the power output port provides DC power to the external device.

14. The power supply of any of claims 11 to 13, wherein the power output port:
is a USB port; and/or
is one of a plurality of power output ports disposed within the upper portion of the housing to extend through the top surface of the housing.

15. The power supply of any of claims 11 to 14, further comprising a plurality of indicators supported on the top surface of the housing and configured to display a battery life level of the plurality of battery cells.
